# EUROPEAN PATENT SPECIFICATION

(11) **EP 2 548 057 B1**
(45) Date of publication and mention of the grant of the patent: **27.11.2019**
(21) Application number: 11756943.4
(22) Date of filing: 16.03.2011
(51) Int. Cl.: G02B 6/02, G02B 6/26, G02B 6/04

(54) **TECHNIQUES AND DEVICES FOR LOW-LOSS, MODEFIELD MATCHED COUPLING TO A MULTICORE FIBER**
TECHNIKEN UND VORRICHTUNGEN ZUR VERLUSTARMEN FELDANGEPASSTEN KUPPLUNG AN EINE MEHRKERNFASER
TECHNIQUES ET DISPOSITIFS POUR UN COUPLAGE À FAIBLE PERTE ADAPTÉ EN CHAMP MODAL À UNE FIBRE MULTICOEUR

(30) Priority: 16.03.2010 US 314182 P
(43) Date of publication of application: 23.01.2013
(73) Proprietor: OFS Fitel, LLC, Norcross, GA 30071 (US)
(72) Inventor: FINI, John Michael, Metuchen, NJ 08840 (US); TAUNAY, Thierry Franck, Bridgewater, NJ 08807 (US); YAN, Man F., Berkeley Heights, NJ 07922 (US); ZHU, Benyuan, Princeton, NJ 08540 (US)
(74) Representative: Zimmermann, Tankred Klaus
(86) International application number: PCT/US2011/028692
(87) International publication number: WO 2011/116109

(56) References cited:
- WO-A1-2010/120958
- FR-A1- 2 747 800
- US-A- 5 748 820
- US-A1- 2005 069 271
- US-A1- 2006 045 444
- US-A1- 2006 257 083
- US-A1- 2007 116 418
- US-B1- 6 282 342
- B Zhu ET AL: "Seven-core multicore fiber transmissions for passive optical network References and links", Optical Society of America IEICE Electron. Express Opt. Lett. Opt. Express US Patent, 11 May 2010 (2010-05-11), pages 98-103, XP055290268, Retrieved from the Internet: URL:https://www.osapublishing.org/DirectPD FAccess/7FCFDC9B-B553-8E09-2604DA43032E35C E_199464/oe-18-11-11117.pdf?da=1&id=199464 &seq=0&mobile=no [retrieved on 2016-07-21]

## Description

### BACKGROUND OF THE INVENTION

### Field of the Invention

The present invention relates generally to techniques and devices for low-loss modefield-matching coupling to a multicore fiber.

### Background Art

Because of the ever-expanding need for large-capacity optical networks, there is increasing interest in the design and fabrication of systems employing multicore fibers (MCFs) as a means for expanding network capacity. Additionally, low-cost, high-fiber-count, high-density cables are necessary to construct practical optical subscriber feeder lines. Likewise, MCFs are being explored as a way to overcome the limitations imposed by cable diameter and/or length.

One issue that appears likely to have a significant impact on the performance and ultimately the practicality of MCF-based systems is the ability of these systems to multiplex and demultiplex individual signals propagating in the MCF cores. Several methods have been proposed, but these methods are complex and require multiple components.

Additionally, generally speaking, it is advantageous for an MCF to have an outer diameter that is comparable to that of conventional single-core fibers, which typically have an outer diameter on the order of 125 µm. In a typical MCF, to achieve a suitable outer diameter, the core-to-core spacing is on the order of 40 µm. Coupling a plurality of single-core fibers to the cores of a single MCF of comparable outer diameter and achieving proper core alignment requires a reduction of the outer diameters of the lead ends of the single-core fibers. Reduction techniques may include, for example, mechanical approaches (e.g., grinding) and chemical approaches (e.g., etching).

A technique has been suggested for coupling a pair of single-core fibers to a twin-core MCF. The two single-core fibers are inserted into a twin-hole capillary to form an assembly that is then tapered to match the core spacing of the twin-core MCF. However, the full exploitation of the potential of MCFs requires the use of MCFs with a large number of cores, e.g., 7 or more. The cores may be single-moded or they may have few or many modes. The described technique is not suitable for use with these MCFs, because of the required tapering ratio and the fact that optical characteristics that are important to high capacity signal transport, such an optical crosstalk, were not considered. It is well known that in certain design regimes tapering a step-index fiber increases the modefield diameter, which will result in increased coupling losses.

Tapered fiber bundles (TFBs), such as that shown in U.S. Pat. No. 5,864,644, have been used to provide a transition for the LP01 signal mode between amplifier stages, as well as for coupling pump light. This technique has not been satisfactorily extended to the coupling of multiple signal cores to an MCF. One reason is that surface tension during bundle tapering tends to smooth out the outer surface of the bundle into an approximately circular shape. Therefore, while the modefield diameters of the tapered cores may match the modefield diameters of the corresponding MCF cores, the surface tension effects introduce significant deformations into the outer cores in the bundle. These deformations alter the core and modefield shape, resulting in excessive coupling losses and potentially becoming a source of crosstalk between neighboring cores.

FR 2 747 800 A1 describes a junction unit for linking each core of a multi-core optical fiber with the respective cores of mono-core optical fibers. The unit includes a positioning element having a number of micro-channels which are arranged in a design identical to the distribution of the fibers within the multi-core fiber. The reduced thickness portions of the mono-core optical fibers are received at one end of the positioning element and then extend through the whole length of the positioning element. A support block is provided to hold the positioning element and the multi-core optical fiber in intimate contact, such that the respective cores of the two assemblies are aligned.

### SUMMARY OF THE INVENTION

It is an object of the present invention to provide improved techniques and devices for low-loss modefield-matching coupling to a multicore fiber.

This object is achieved by the method of claim 1, and by the coupling assembly of claim 5.

### BRIEF DESCRIPTION OF THE DRAWINGS

FIGS. 1 A and 1B show, respectively, cross section and isometric diagrams of an exemplary 7-core multicore fiber used to illustrate aspects of the invention.
FIG. 2 is a diagram of a coupling environment, not drawn to scale, which is provided as a framework for the description of various aspects of the invention.
FIG. 3 shows a cross section of a first example of a multi-hole fiber coupler according to an aspect of the invention.
FIG. 4 shows a cross section of a second example of a multi-hole fiber coupler according to an aspect of the invention.
FIG. 5 shows an isometric view of a multi-hole fiber coupler according to a further aspect of the invention.
FIGS. 6A and 6B show cross sections of a mode-property-maintaining single-core fiber, before and after tapering.
FIGS. 7A and 7B are graphs showing respective refractive index profiles and LP₀₁ power distribution functions for the untapered and tapered fibers shown in FIGS. 6 A and 6B.
FIG. 8 is a graph showing the relationship between modefield diameter and taper ratio for the fiber of FIGS. 6A-6B and 7A-7B.
FIG. 9 is a graph showing the fraction of LP₀₁ power outside of the outer cladding region of the fiber of FIGS. 6A-6B and 7A-7B.
FIG. 10 is a flowchart of a general technique 200 according to a practice of the invention for coupling each of a plurality of terminals to respective individual cores of a multicore fiber.
FIGS. 11-17 are a series of drawings illustrating the steps of the technique shown in the FIG. 10 flowchart.

### DETAILED DESCRIPTION

An aspect of the invention is directed to structures and techniques for coupling a plurality of single-core fibers (SCF) to a multicore fiber (MCF), wherein each SCF core is coupled to a respective individual MCF core.

Exemplary practices of the invention are described below in the context of providing coupling to the individual cores of a 7-core MCF design. However, it will be appreciated that the described techniques are applicable in other contexts, with other types of multicore fibers having different numbers of cores, different core and cladding structures, different core configurations, and the like.

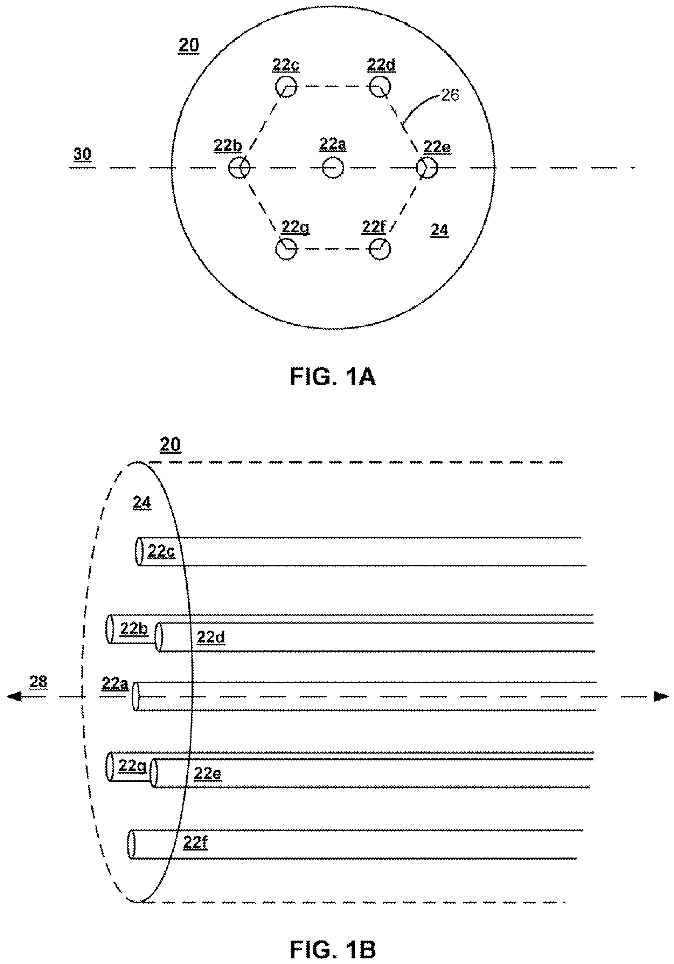

FIGS. 1A and IB show, respectively, cross section and isometric diagrams of an exemplary 7-core MCF 20 of the type described in Serial No. 61/314,184, comprising an array of seven core regions 22a-g within a common cladding region 24. A first core region 22a is located at the center of the fiber. Six of the core regions 22b-g are arranged as a hexagon 26 surrounding central core 22a. The seven core regions 22a-g are configured to carry respective light transmissions down the length of CF 20 along a longitudinal axis 28 thereof.

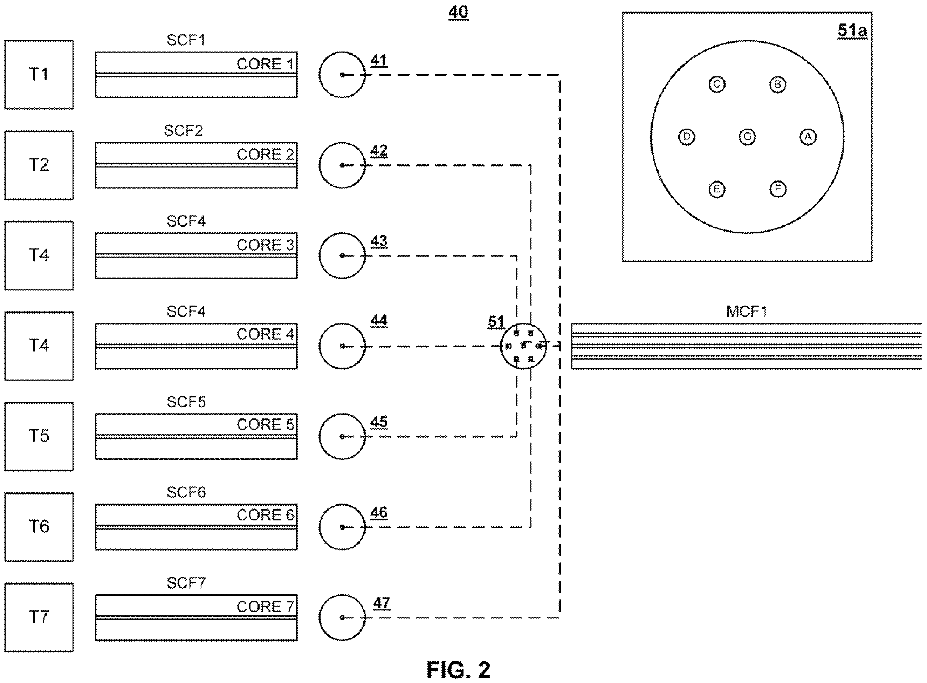

FIG. 2 is a diagram of a coupling environment 40, not drawn to scale, which is provided as a framework for the description of various aspects of the invention. In environment 40, coupling is to be provided between each of seven terminals, represented by squares T1-T7 and a corresponding individual core of a 7-core multicore fiber MCF1. For the purposes of the present discussion, the term "terminal" refers to a connection point for any device carrying an optical signal and can include, for example, fibers and fiber-based devices, as well as non-fiber devices, such as surface-mount light-emitting diodes, or the like.

For the purposes of the present discussion, the individual cores of MCF 1 have been arbitrarily assigned identifying letters A-G, as shown in inset 51a, which are to be connected, respectively, to terminals T1-T7. Single-core fibers SCF1-SCF7, shown in cross section, are provided as pigtail connectors. Each of pigtail fibers SCF1-SCF7 has a tail end for connecting to terminals T1 -T7, and a lead end for connection to multicore fiber MCF1. The single-core fibers SCF1-SCF7 and multicore fiber MCF1 have substantially equal outer diameters.

For purposes of illustration, FIG. 2 further provides views of single-core fiber endfaces 41-47 and multicore fiber endface 51, with broken lines illustrating the respective connections to be made. As described below, aspects of the invention provide structures and techniques for connecting each of SCF cores 1-7 to individual MCF cores A-G.

It should be noted that, in the present example, the individual cores of the MCF have the same characteristics. However, it will be appreciated that the described structures and techniques may be practiced, with suitable modification as necessary, using an MCF in which one or more individual cores have characteristics different from those of the other cores. In such a case, it may be necessary to modify the corresponding SCFs in order to provide suitable matching with individual cores having different characteristics.

In order to achieve acceptably low splice loss and undisturbed modal characteristics as signals transit the coupler, such as little or no induced crosstalk (if desired) or little or no alteration of mode content at the connection for each SCF core to a respective MCF core, it is essential to meet the following criteria: modefield matching, precise individual core alignment, and a precisely configured core geometry.

As described below, these criteria and others are addressed by aspects of the invention, which include: (1) a coupling device, referred to herein as a multi-hole fiber coupler (MHFC); (2) an SCF that is designed to maintain selected mode properties, within a tolerance range, over a given taper ratio; and (3) a coupling technique employing the described MHFC and modefield-maintaining fiber.

The present discussion is organized as follows:
1. Multi-Hole Fiber Coupler
2. Modefield-Maintaining Fiber
3. Coupling Technique
4. Conclusion

### 1. Multi-Hole Fiber Coupler

An aspect of the invention is directed to a mode-maintaining, tapered multiple-hole fiber coupler (MHFC) that provides matching of mode content, mode shape and modefield diameter, as well as core-to-core alignment, in the described coupling technique.

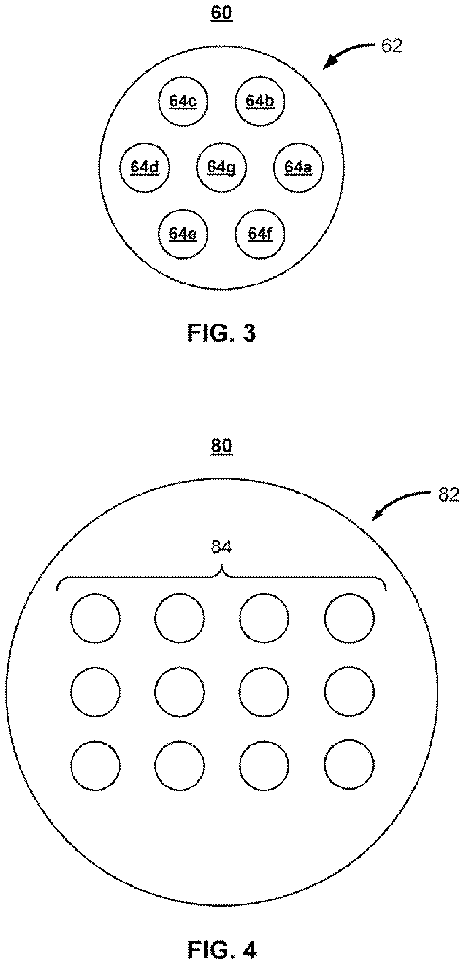

FIG. 3 shows a cross section of a first example of an MHFC 60 according to an aspect of the invention. The MHFC 60 comprises a large-diameter fiber 62, or like body, having a plurality of holes 64a-g therein. The dimensions and configuration of fiber 62 and holes 64a-g are dictated by a number of factors, including the dimensions of the SCF and MCF, the configuration of the individual MCF cores, and the configuration of the terminals.

As discussed below, the lead ends of the pigtail SCFs are loaded into MHFC 60 by inserting them into holes 64a-g at the rear endface of MHFC 60. Thus, holes 62 are dimensioned to have a diameter that is slightly larger than that of the pigtail SCFs. In the present example, the SCFs each have a diameter of 125µm, and each hole has a diameter of 150µm. It should be noted that it would also be possible, depending upon the particular application, to use one or more fibers having different diameters. The diameter of the corresponding holes would be modified accordingly. Furthermore, the spacing between cores can be relatively constant and regular, or can vary. Variable hole spacing could be used to control crosstalk among cores, for example, but obviously must match the geometry of the cores in the MCF.

As further discussed below, the MHFC body is collapsed around SCFs inserted into holes 64 to form an assembly, which is then tapered and spliced to a multicore fiber. The material used to fabricate the MHFC is selected accordingly. In the present example, the MHFC is fabricated from undoped silica (SiO₂), which is the same material used to fabricate the cladding regions of the SCFs, described below. It would also be possible, depending upon a given context, to modify the material used to fabricate the MHFC, or to use a different material or combination of materials. Such other materials include, for example, non-oxide glasses, such as chalcogenide glasses; doped and undoped silica fibers; and the like.

The configuration of the holes 64a-g is dictated by the configuration of the individual cores in the MCF to which the SCFs are to be coupled. In particular, a hole configuration is chosen that is homothetic to the configuration of the MCF cores. Thus, when the SCF-MHFC assembly is tapered and cleaved for splicing to the MCF, the orientation of the SCF cores at the front endface of the assembly matches that of the MCF.

The MHFC 60 shown in FIG. 3 corresponds to a 7-core MCF, such as the MCF shown in FIGS. 1 and 2, in which the individual cores are configured according to a geometry matching that of the holes 64 in MHFC 60.

FIG. 4 shows a cross section of a second example of an MHFC 80 according to a further aspect of the invention. The MHFC 80 comprises a large-diameter fiber 82 including a rectangular configuration of holes 84. FIG. 4 shows that one particular advantage of the described technique is its flexibility with respect to geometry and hole pattern, e.g., square, rectangular, and others. The outer shape of the MCF may be noncircular. This affords several advantages: (a) a noncircular fiber may have a preferred orientation for bending, which can control any bend-induced effects such as bend-induced skewing of the modal effective indices guided in the cores; (b) a noncircular outer fiber shape can be more easily registered to couple directly to surface mount devices, for example; and (c) noncircular outer geometries can facilitate rotational orientation, with outer features serving as markers to distinguish the identity of individual cores.

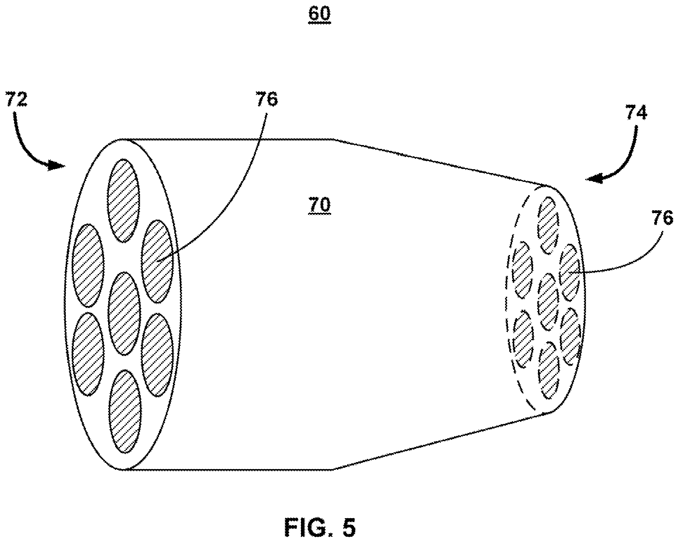

FIG. 5 shows an isometric view of MHFC 60 (FIG. 3), illustrating a further aspect of the invention. As shown FIG. 5, MHFC comprises a body 70 with a rear end 72 and a front end 74. Holes 76 extend between the MHFC body rear end 72 and front end 74.

According to the aspect of the invention illustrated in FIG. 5, the MHFC front end 74 is "pre-tapered" prior to assembly with the pigtail SCFs. In particular, the front end 74 of MHFC 60 has been down-tapered such that the diameter of the holes 76 is slightly smaller than that of the pigtail SCFs. Thus, when a pigtail SCF is loaded into its respective hole, its progress down the length of the hole is halted partway.

There are a number of reasons for pre-tapering the MHFC. Pre-tapering allows a precise indexing of the SMT fibers in the MHFC. In addition, it helps maintain good concentricity for all the fibers within the MHFC.

In the example shown in FIG. 5, the MHFC is fabricated from a fiber having a diameter of 750µm, and the MHFC front end is pre-tapered to a diameter of 575µm. Holes 76 have a rear diameter of 150µm and a front diameter of 115µm.

### 2. MFD-Maintaining Fiber

The second element of the device comprises a specially designed single-core fiber that is capable of maintaining substantially the same modefield diameter (MFD) at feast at the tapered and untapered ends, within a tolerance range, over a large taper ratio, and that displays little or no induced crosstalk.

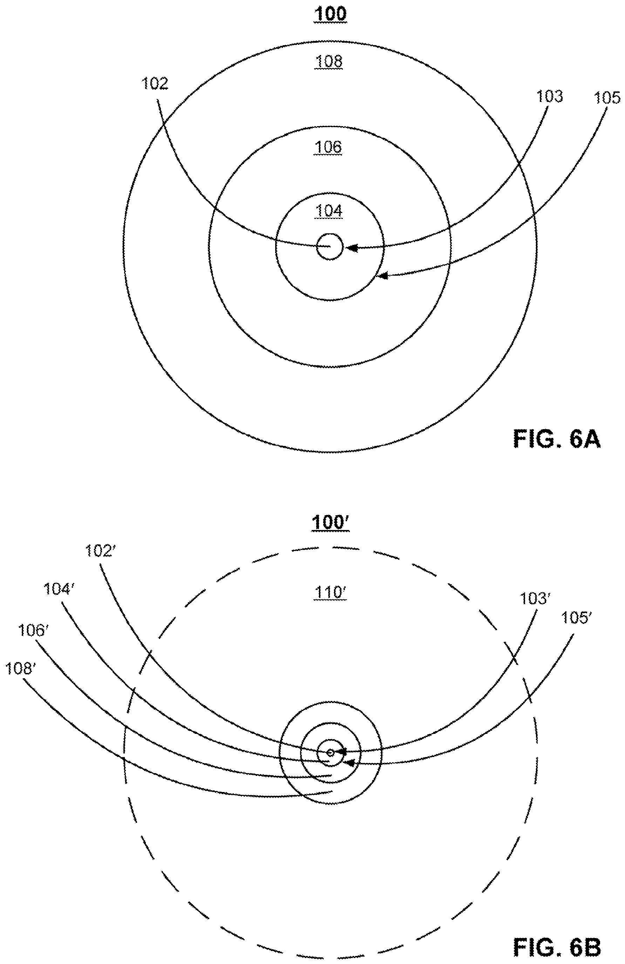

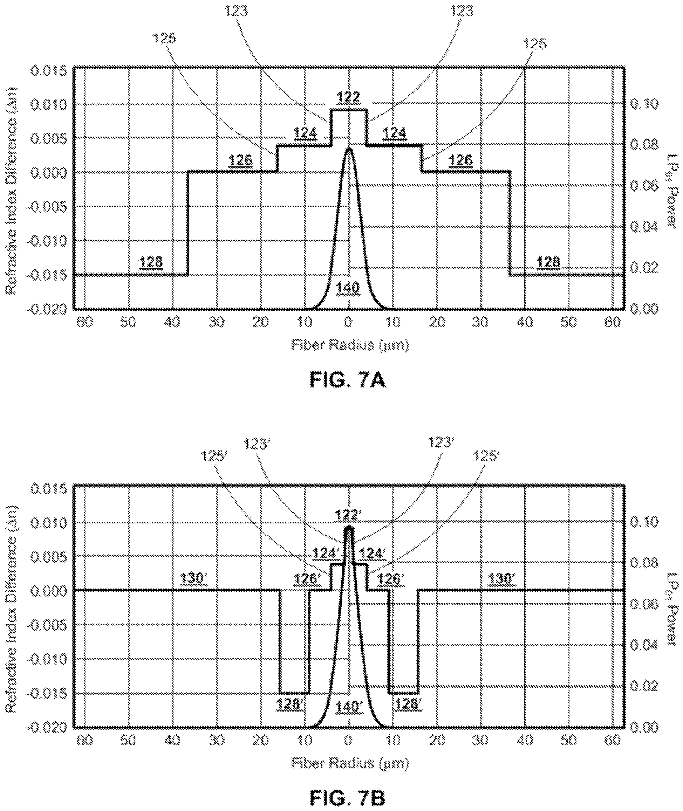

FIG. 6A shows a cross section of an MFD-maintaining single-mode fiber 100 according to the present invention, and FIG. 6B shows a cross section of the fiber 100' after it has been fused with an MHFC as described below and tapered to a 4:1 ratio. FIGS. 7A and 7B show respective refractive index profiles 120/120' and LP₀₁ power distribution functions 140/140' for the untapered and tapered fibers shown in FIGS. 6A and 6B.

As shown in FIGS. 6A and 7A, the fiber has a modified step-index profile, with the following regions: a central core region 102/122, a pedestal region 104/124, an inner cladding region 106/206, and a depressed outer cladding region 108/208. It should be noted that, depending upon a particular application, it may be possible to practice aspects of the invention without the depressed outer cladding region 108/208. As described below, the core, pedestal, and inner cladding combine to create a modefield diameter that remains substantially constant over a given taper ratio. The depressed outer cladding region 108/208 is provided to reduce crosstalk by restricting the radial extent of the optical modefield distribution.

The FIG. 7A refractive index profile 120 shows the respective radii and refractive indices for the untapered fiber regions. For the purposes of the present discussion, a region's refractive index is expressed as an index difference An for each fiber region, i.e., the refractive index for the fiber region minus the refractive index of the inner cladding.

From FIGS. 6A and 7A, it will be seen that a first waveguide 103/123 having a radius of approximately 8µm, is created by the boundary between the core 102/122 and pedestal 104/124. A second waveguide 105/125, having a radius of approximately 32µm, is created by the boundary between the core 104/124 and pedestal 106/126. In the untapered fiber, the LP₀₁ mode at a wavelength in the range of 1310nm/1550nm is confined by the first waveguide, with some light leaking out of the waveguide. Using a best-fitting Gaussian approach, the modefield diameter is determined to be approximately 10.25µm, Thus, in the untapered fiber, it will be seen that the second waveguide, which has a diameter of 32µm, does not have a significant effect on modefield diameter.

As discussed below, single core fibers are inserted into the MHFC, which is then collapsed around the single core fibers to form an assembly. The assembly is then tapered to match the diameter of the endface of the multicore fiber. Thus, the FIG. 6B cross section and the FIG. 7B refractive index profile show the tapered fiber regions, 102'/122', 104'/124', 106'/126', 108'/128' surrounded by a portion of the MHFC body 110'/130'.

The pedestal region 140 preserves the fiber's modefield diameter as the fiber is tapered. As the first waveguide 103/123 is tapered to a diameter below 8µm, the signal is guided less strongly by first waveguide 103/123, thereby tending to increase the modefield diameter. However, the diameter of the second waveguide 105/125 is also decreasing. Initially, the diameter of the second waveguide 105/125 is approximately 32 µm, and is thus too large to have a significant effect on modefield diameter. As the outer waveguide is tapered to a diameter approaching 8 µm, it increasingly influences the modefield properties. The net result is that the fiber modefield remains substantially the same, within a tolerance range, between the front end and rear end over a selected taper ratio. Thus, the modefield diameter of the fiber, tapered to a 4:1 ratio, is approximately 9.84µm.

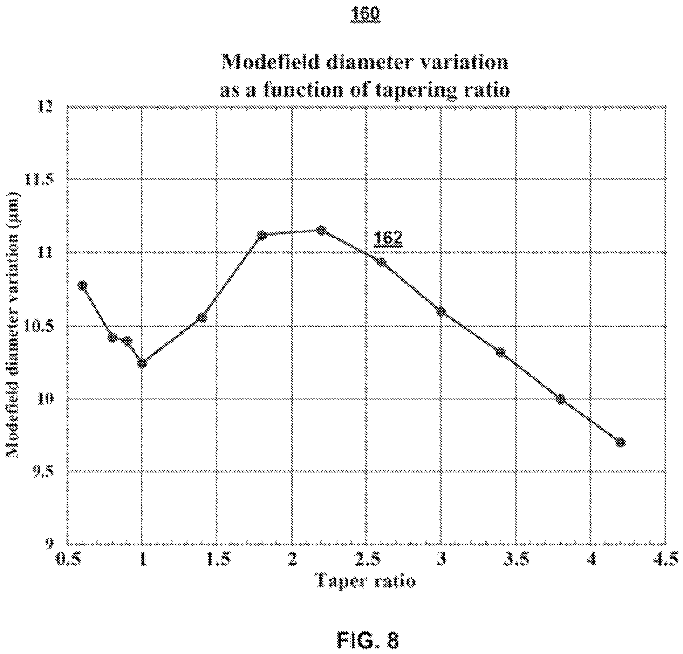

FIG. 8 is a graph 160 showing the relationship between modefield diameter and taper ratio for fiber 100. As indicated by plot 162, the modefield diameter varies from a maximum value of approximately 11.25µm to a minimum value of approximately 9.40µm, over tapering ratios ranging from 0.6 to 4.2. Thus, as the fiber is tapered, its modefield diameter is substantially constant, within a tolerance range. It should be noted that, in this example, the variation is sufficiently small so that the coupling loss due to modefield diameter mismatch is small (i.e., less than 0.5dB). [0.02 would be difficult to achieve]

If a particular application requires a smaller tolerance range, the configuration of the fiber may be modified accordingly. For example, a second pedestal may be added.

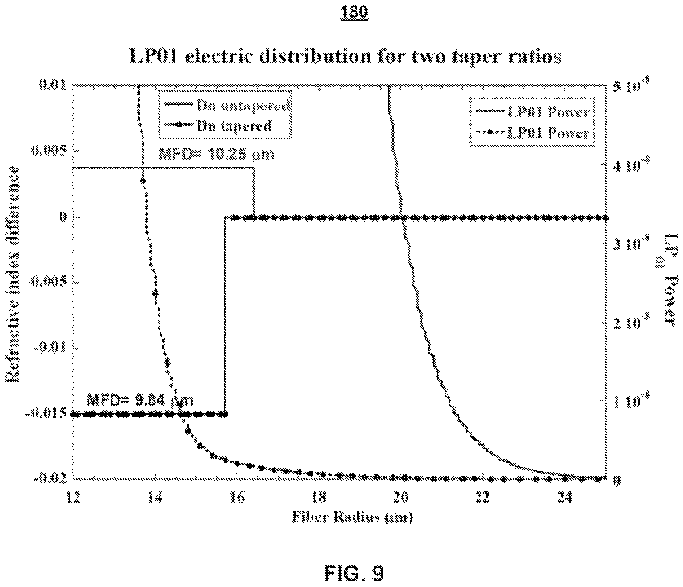

A further aspect of the invention is directed to the issue of crosstalk. In some designs, crosstalk in MCF is one of the potential, degrading factors in performance. Consequently, these designs need to minimize any leakage from one core to its neighbors during tapering of the MHFC. Thus, an outer cladding region 108/128 is provided that is fabricated from a low-index material such as fluorine-doped doped silica. As shown in the FIG. 9 graph 180, the fraction of LP₀₁ power outside of the down-doped outer cladding region 108/128 is essentially equal to zero.

Other techniques and materials may be used to construct the down-doped outer cladding region 108/128. For example, it is possible to achieve a comparable result with a ring of air holes or bubbles, or other suitable low-index structure. Regions which include holes or voids offer the additional advantage of scattering any light which happens to penetrate beyond the pedestal further reducing crosstalk.

Since the cores of the MCF may support multiple modes, the cores of the single-core fiber and of the MHFC should also support multiple modes. For cases in which each mode carries a distinct optical signal, the modal content of the single-core and multicore fibers should be identical. In some cases, the crosstalk among modes within a given core should be minimized, but in other cases this may not be critical. To achieve comparable modal content before and after tapering, well-known methods of matching the "modal volume" may be used, where modal volume is a measure of the product of the refractive index and diameter of the core waveguide. Just as the modefield diameter can be maintained relatively constant despite physical tapering of the fiber diameter by using a pedestal concept, so too can the modal volume be maintained.

### 3. Technique

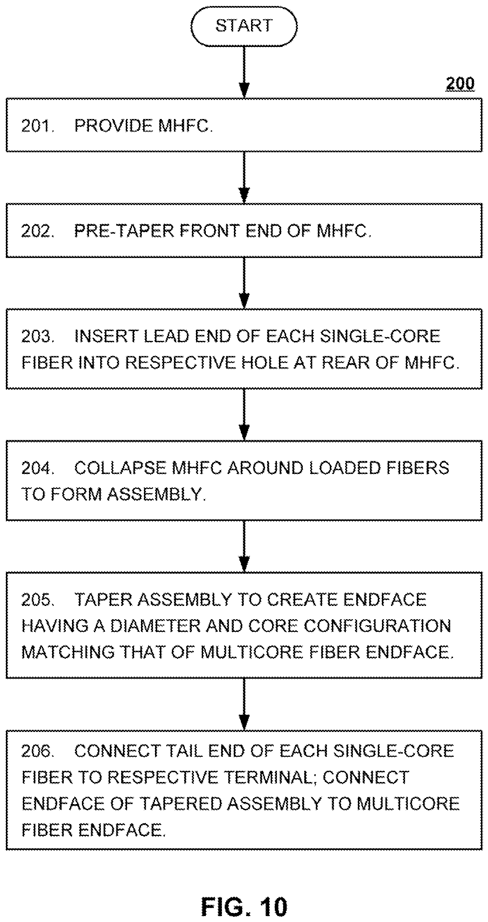

FIG. 10 is a flowchart of a general technique 200 according to a practice of the invention for coupling each of a plurality of terminals to respective individual cores of a multicore fiber. The technique 200 comprises the following steps:
Step 201: Provide multi-hole fiber coupler (MHFC), such as the MHFC shown in FIGS. 3-5, and described above.
Step 202: Pre-taper front end of MHFC.
Step 203: Insert lead end of each single-core fiber into respective hole at rear of MHFC.
Step 204: Collapse MHFC around loaded fibers to form assembly.
Step 205: Taper assembly to create endface having a diameter and core configuration matching that of multicore fiber endface.
Step 206: Connect tail end of each single-core fiber to respective terminal; connect endface of tapered assembly to multicore fiber endface.

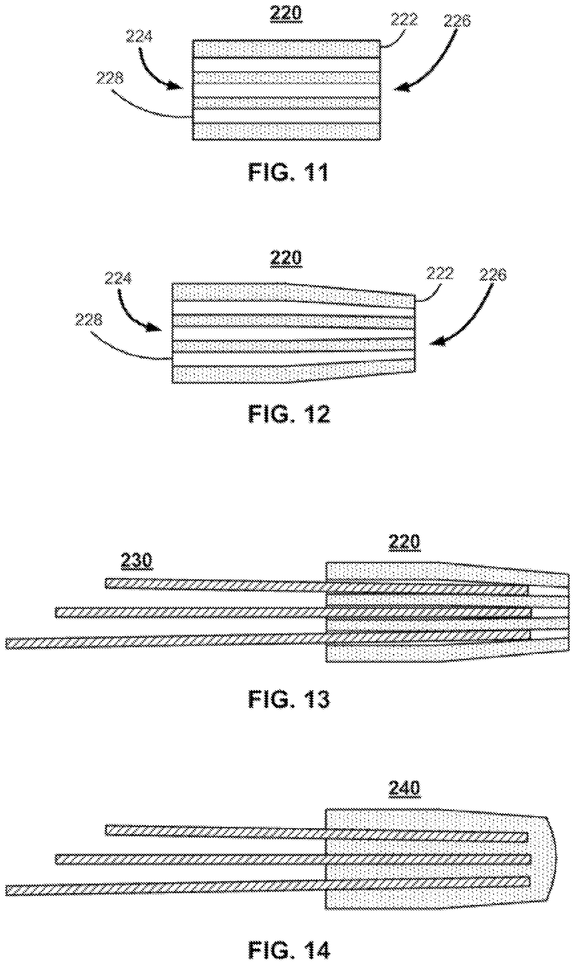

Exemplary practices of each of these steps is illustrated in FIGS. 11-17, not drawn to scale, and discussed below.

In Step 201, illustrated in FIG. 11, there is provided a multi-hole fiber coupler (MHFC) 220, shown in cross section, not drawn to scale, of the type shown in FIGS. 3-5, discussed above. As discussed above, the MHFC comprises a large diameter fiber 222, or like body, having a rear end 224, a front end 226, and a number of holes 228 extending therebetween. Each hole 228 is dimensioned to closely receive a lead end of a single-core fiber 230 inserted at the rear end of the MHFC. The holes 228 are configured to homothetically match the configuration of the individual cores of the multicore fiber for which coupling is to be provided.

In Step 202, illustrated in FIG. 12 the front end 226 of the MHFC 220 is pre-tapered, such that the front end of each hole is down-tapered to a diameter that is slightly less than that of its respective single-core fiber. As a result of this tapering, when each single-core fiber is inserted into its respective hole, its progress down the length of the fiber is halted partway, as it butts up against the interior surface of the hole.

One way to accomplish the described pre-tapering is by heating the front end of the taper and stretching it to the desired taper ratio. In addition, the front end of the MHFC may be trimmed to achieve a desired overall length and endface diameter.

As noted above, in certain applications, it may be possible to practice the described technique without pre-tapering.

In step 203, illustrated in FIG. 13, the lead end of each of the plurality of single-core fibers 230 is loaded into a respective hole at the rear end of the MHFC. As mentioned above, the fibers do not pass all the way through their respective holes, but are halted partway therethrough as they butt up against the inner circumference of the pre-tapered portion of the MHFC.

In step 204, illustrated in FIG. 14, the MHFC is collapsed around the single-core fibers, starting at its front end, to form an assembly 240.

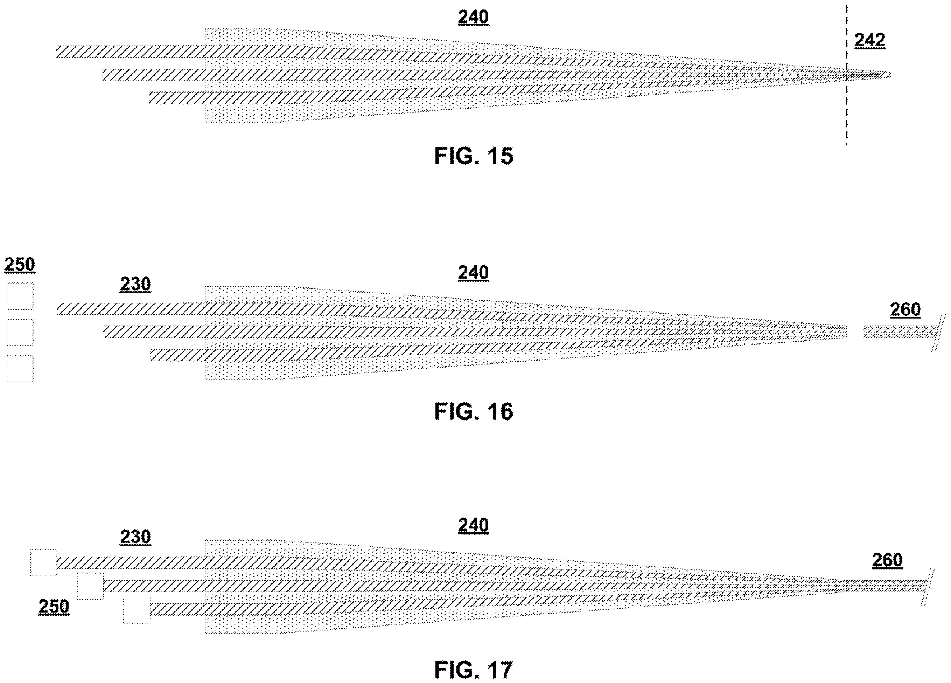

In step 205, illustrated in FIG. 15, the MHFC assembly 240 is down-tapered to a tapering ratio that is suitable for creating an endface with a diameter matching that of a multicore fiber. One way to accomplish this is to heat an end of the assembly, and stretching it to the desired taper ratio. The end of the tapered assembly is then cleaved at broken line 242 to expose the ends of the single-core fibers and to achieve the desired outer diameter.

In step 206, illustrated in FIGS. 16 and 17, the tail ends of the single-core fibers are connected to respective terminals, and the front endface of the MHFC is connected to an endface of the MCF, with the cores of the fused and tapered SCFs aligned with the individual cores of the MCF.

### 4. Conclusion

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. A method for connecting each of a plurality of terminals to respective individual cores (22A-22F) of a multicore fiber (20), comprising:
(a) providing a plurality of single-core fibers, each having a tail end and a lead end, wherein the tail end of each of the single-core fibers corresponds to a respective terminal, wherein at least some of the single-core fibers have an outer diameter substantially equal to that of the multicore fibre (20), and wherein each of the single-core fibers comprises a plurality of concentric regions including a core, a pedestal surrounding the core, and a cladding surrounding the pedestal, wherein the core, pedestal, and cladding have respective refractive indices that are configured to create an inner waveguide between the core and pedestal and an outer waveguide between the pedestal and the cladding, and wherein the core, pedestal, and cladding are configured such that as the fiber is tapered, respective changes in the diameters of the inner and outer waveguides result, over a selected taper ratio, in a substantially constant modefield diameter that matches that of a respective individual core of the multicore fiber (20);
(b) assembling the single-core fibers into an assembly by fusing each single-core fiber lead end into a respective hole in a multi-hole fiber coupler having a body with a rear end, a front end, and a plurality of holes extending therebetween, wherein the holes have a configuration matching that of the individual cores (22A-22F) of the multicore fiber (20); and
(c) down tapering the front end of the body, with the single-core fibers inserted therein, to create a front endface having an outer diameter matching that of the multicore fiber (20), in which the single-core fiber cores are arranged in a configuration matching that of the cores (22A-22F) of the multicore fiber (20),
such that the multicore fiber (20) is connectable to the front endface of the assembly such that the respective cores of the single-core fiber are aligned with the individual cores of the multicore fiber and modefield diameter is maintained for light propagating between the individual cores (22A-22F) of the multicore fiber (20) and respective cores of the single-core fibers.

2. The method of claim 1,
wherein each hole is dimensioned at the rear end of the coupler body to closely receive a respective length of the single-core fiber, and
wherein the method further comprises in step (b)
inserting a lead end of one or more lengths of single-core fiber into a respective hole at the rear end of the coupler body; and
collapsing the coupler body around the inserted lengths of single-core fiber to form an assembly.

3. The method of claim 1,
wherein step (a) includes pre-tapering the coupler body front end, such that each of the plurality of holes is down-tapered to a diameter that is smaller than that of a respective length of the single-mode fiber, such that when each of the lengths of the single-mode fiber is inserted into a respective hole at the rear end of the coupler body, its progress through the respective hole is halted partway therethrough.

4. The method of claim 1,
wherein the core of the single-core fiber supports transmission of an optical signal comprising multiple transverse optical modes.

5. A coupling assembly for connecting each of a plurality of terminals to respective individual cores (22A-22F) of a multicore fiber (20), comprising:
a plurality of single-core fibers, each having a tail end and a lead end, wherein the tail end of each single-core fiber corresponds to a respective terminal, wherein at least some of the single-core fibers have an outer diameter substantially equal to that of the multicore fiber (20), and wherein each of the single-core fibers is configured to maintain a substantially constant modefield diameter over a selected tapering ratio,
wherein each of the single-core fibers comprises a plurality of concentric regions including a core, a pedestal surrounding the core, and a cladding surrounding the pedestal, wherein the core, pedestal, and cladding have respective refractive indices that are configured to create an inner waveguide between the core and pedestal and an outer waveguide between the pedestal and the cladding, and wherein the core, pedestal, and cladding are configured such that as the fiber is tapered, respective changes in the diameters of the inner and outer waveguides result in the substantially constant modefield diameter, that matches that of a respective individual core of the multicore fiber (20); and
a coupler having a body with a rear end and a front end,
wherein the coupler is a multi-hole fiber coupler having respective holes, extending between the coupler rear end and front end, into which each single-core fiber lead end is inserted and fused to form an assembly that is down tapered to create a front endface having an outer diameter matching that of the multicore fiber (20), in which the single-core fiber cores are arranged in a configuration matching that of the cores (22A-22F) of the multicore fiber (20),
such that the multicore fiber (20) is connectable to the front endface of the assembly with the respective cores of the single-core fibers aligned with the individual cores (22A - 22F) of the multicore fiber (20) and with the modefield diameter maintained for light propagating between the individual cores (22A-22F) of the multicore fiber (20) and respective cores of the single-core fibers.

6. The coupling assembly of claim 5,
wherein the single-core fiber cladding comprises an inner cladding region and an outer cladding region, and wherein the outer cladding region is configured to have a refractive index lower than that of the cladding region, so as to prevent crosstalk between the cores of the single-core fibers.

## Patentansprüche

1. Ein Verfahren zum Verbinden jedes einer Mehrzahl von Anschlüssen mit jeweiligen Einzeladern (22A-22F) einer mehradrigen Faser (20), das folgende Schritte aufweist:
(a) Bereitstellen einer Mehrzahl von einadrigen Fasern, die jeweils ein hinteres Ende und ein führendes Ende aufweisen, wobei das hintere Ende jeder der einadrigen Fasern einem jeweiligen Anschluss entspricht,
wobei zumindest einige der einadrigen Fasern einen Außendurchmesser aufweisen, der im Wesentlichen gleich demjenigen der mehradrigen Faser (20) ist, und
wobei jede der einadrigen Fasern eine Mehrzahl konzentrischer Regionen aufweist, die eine Ader, einen die Ader umgebenden Sockel und einen den Sockel umgebenden Mantel umfassen, wobei die Ader, der Sockel und der Mantel jeweilige Brechungsindizes aufweisen, die dazu konfiguriert sind, einen inneren Wellenleiter zwischen der Ader und dem Sockel und einen äußeren Wellenleiter zwischen dem Sockel und dem Mantel zu erzeugen, und wobei die Ader, der Sockel und der Mantel derart konfiguriert sind, dass, da die Faser verjüngt ist, jeweilige Änderungen der Durchmesser des inneren und äußeren Wellenleiters über ein ausgewähltes Verjüngungsverhältnis zu einem im Wesentlichen konstanten Modenfelddurchmesser führen, der mit demjenigen einer jeweiligen Einzelader der mehradrigen Faser (20) übereinstimmt;
(b) Anordnen der einadrigen Fasern zu einer Anordnung, indem das führende Ende jeder einadrigen Faser in ein jeweiliges Loch in einem Mehrfachlochfaserkoppler geschmolzen wird, der einen Körper mit einem rückwärtigen Ende, einem vorderen Ende und einer Mehrzahl von Löchern aufweist, die sich zwischen denselben erstrecken, wobei die Löcher eine Konfiguration aufweisen, die mit derjenigen der Einzeladern (22A-22F) der mehradrigen Faser (20) übereinstimmt; und
(c) Abwärtsverjüngen des vorderen Endes des Körpers, wobei die einadrigen Fasern in denselben eingeführt sind, um eine vordere Endfläche mit einem Außendurchmesser zu erzeugen, der demjenigen der mehradrigen Faser (20) entspricht, wobei die Adern der einadrige Fasern in einer Konfiguration angeordnet sind, die mit derjenigen der Adern (22A-22F) der mehradrigen Faser (20) übereinstimmt,
derart, dass die mehradrige Faser (20) mit der vorderen Endfläche der Anordnung so verbunden werden kann, dass die jeweiligen Adern der einadrigen Faser mit den Einzeladern der mehradrigen Faser ausgerichtet sind und der Modenfelddurchmesser für Licht, das sich zwischen den Einzeladern (22A-22F) der mehradrigen Faser (20) und den jeweiligen Adern der einadrigen Fasern ausbreitet, beibehalten wird.

2. Das Verfahren gemäß Anspruch 1,
wobei jedes Loch an dem rückwärtigen Ende des Kopplerkörpers dahin gehend dimensioniert ist, eine jeweilige Länge der einadrigen Faser eng aufzunehmen,
und
wobei das Verfahren ferner bei Schritt (b) Folgendes aufweist:
Einführen eines führenden Endes einer oder mehrerer Längen einer einadrigen Faser in ein jeweiliges Loch an dem rückwärtigen Ende des Kopplerkörpers; und
Zusammenlegen des Kopplerkörpers um die eingeführten Längen der einadrigen Faser, um eine Anordnung zu bilden.

3. Das Verfahren gemäß Anspruch 1,
wobei Schritt (a) ein Vorverjüngen des vorderen Endes des Kopplerkörpers umfasst, sodass jedes der Mehrzahl von Löchern abwärts zu einem Durchmesser verjüngt wird, der kleiner als derjenige einer jeweiligen Länge der Einmodenfaser ist, sodass dann, wenn jede der Längen der Einmodenfaser in ein jeweiliges Loch an dem rückwärtigen Ende des Kopplerkörpers eingeführt wird, der Fortschritt derselben durch das jeweilige Loch auf dem Weg durch dasselbe angehalten wird.

4. Das Verfahren gemäß Anspruch 1,
wobei die Ader der einadrigen Faser eine Übertragung eines optischen Signals unterstützt, das mehrere transversale optische Moden aufweist.

5. Eine Kopplungsanordnung zum Verbinden jedes einer Mehrzahl von Anschlüssen mit jeweiligen Einzeladern (22A-22F) einer mehradrigen Faser (20), die folgende Merkmale aufweist:
eine Mehrzahl von einadrigen Fasern, die jeweils ein hinteres Ende und ein führendes Ende aufweisen, wobei das hintere Ende jeder der einadrigen Fasern einem jeweiligen Anschluss entspricht, wobei zumindest einige der einadrigen Fasern einen Außendurchmesser aufweisen, der im Wesentlichen gleich demjenigen der mehradrigen Faser (20) ist, und wobei jede der einadrigen Fasern dazu konfiguriert ist, einen im Wesentlichen konstanten Modenfelddurchmesser über ein ausgewähltes Verjüngungsverhältnis beizubehalten,
wobei jede der einadrigen Fasern eine Mehrzahl konzentrischer Regionen aufweist, die eine Ader, einen die Ader umgebenden Sockel und einen den Sockel umgebenden Mantel umfassen, wobei die Ader, der Sockel und der Mantel jeweilige Brechungsindizes aufweisen, die dazu konfiguriert sind, einen inneren Wellenleiter zwischen der Ader und dem Sockel und einen äußeren Wellenleiter zwischen dem Sockel und dem Mantel zu erzeugen, und wobei die Ader, der Sockel und der Mantel derart konfiguriert sind, dass, da die Faser verjüngt ist, jeweilige Änderungen der Durchmesser des inneren und äußeren Wellenleiters zu dem im Wesentlichen konstanten Modenfelddurchmesser führen, der mit demjenigen einer jeweiligen Einzelader der mehradrigen Faser (20) übereinstimmt; und
einen Koppler, der einen Körper mit einem rückwärtigen Ende und einem vorderen Ende aufweist,
wobei der Koppler ein Mehrfachlochfaserkoppler mit jeweiligen Löchern ist, die sich zwischen dem rückwärtigen Ende und vorderen Ende des Kopplers erstrecken, in die das führende Ende jeder einadrigen Faser eingeführt und geschmolzen wird, um eine abwärts verjüngte Anordnung zu bilden, um eine vordere Endfläche mit einem Außendurchmesser zu erzeugen, der demjenigen der mehradrigen Faser (20) entspricht, wobei die Adern der einadrigen Faser in einer Konfiguration angeordnet sind, die mit derjenigen der Adern (22A-22F) der mehradrigen Faser (20) übereinstimmt,
derart, dass die mehradrige Faser (20) mit der vorderen Endfläche der Anordnung so verbunden werden kann, dass die jeweiligen Adern der einadrigen Fasern mit den Einzeladern (22A-22F) der mehradrigen Faser (20) ausgerichtet sind und der Modenfelddurchmesser für Licht, das sich zwischen den Einzeladern (22A-22F) der mehradrigen Faser (20) und jeweiligen Adern der einadrigen Fasern ausbreitet, beibehalten wird.

6. Die Kopplungsanordnung gemäß Anspruch 5,
wobei der Mantel der einadrigen Faser eine innere Mantelregion und eine äußere Mantelregion aufweist und wobei die äußere Mantelregion dazu konfiguriert ist, einen Brechungsindex aufzuweisen, der niedriger als der der Mantelregion ist, um ein Übersprechen zwischen den Adern der einadrigen Fasern zu vermeiden.

## Revendications

1. Procédé de connexion de chacune d'une pluralité de bornes à des noyaux individuels respectifs (22A à 22F) d'une fibre à noyaux multiples (20), comprenant le fait de:
(a) prévoir une pluralité de fibres à un seul noyau présentant, chacune, une extrémité postérieure et une extrémité antérieure, où l'extrémité postérieure de chacune des fibres à un seul noyau correspond à une borne respective,
dans lequel au moins certaines des fibres à un seul noyau présentent un diamètre extérieur sensiblement égal à celui de la fibre à noyaux multiples (20), et
dans lequel chacune des fibres à un seul noyau comprend une pluralité de régions concentriques comportant un noyau, un support entourant le noyau et une gaine entourant le support, où le noyau, le support et la gaine présentent des indices de réfraction respectifs qui sont configurés pour créer un guide d'onde intérieur entre le noyau et le support et un guide d'onde extérieur entre le support et la gaine, et où le noyau, le support et la gaine sont configurés de sorte que, du fait que la fibre est effilée, les variations respectives des diamètres des guides d'onde intérieur et extérieur résultent, sur un taux d'effilement sélectionné, en un diamètre de champ de mode sensiblement constant qui correspond à celui d'un noyau individuel respectif de la fibre à noyaux multiples (20);
(b) assembler les fibres à un seul noyau pour obtenir un ensemble en fusionnant chaque extrémité antérieure de fibre à un seul noyau dans un trou respectif dans un coupleur de fibres à trous multiples présentant un corps avec une extrémité arrière, une extrémité avant et une pluralité de trous s'étendant entre ces dernières, où les trous présentent une configuration correspondant à celle des noyaux individuels (22A à 22F) de la fibre à noyaux multiples (20); et
(c) effiler l'extrémité avant du corps avec les fibres à un seul noyau y insérées, pour créer une face d'extrémité avant présentant un diamètre extérieur correspondant à celui de la fibre à noyaux multiples (20) dans laquelle les noyaux de fibre à un seul noyau sont disposés selon une configuration correspondant à celle des noyaux (22A à 22F) de la fibre à noyaux multiples (20),
de sorte que la fibre à noyaux multiples (20) puisse être connectée à la face d'extrémité avant de l'ensemble de sorte que les noyaux respectifs de la fibre à un seul noyau soient alignés sur les noyaux individuels de la fibre à noyaux multiples et que le diamètre de champ de mode soit maintenu pour la propagation de la lumière entre les noyaux individuels (22A à 22F) de la fibre à noyaux multiples (20) et les noyaux respectifs des fibres à un seul noyau.

2. Procédé selon la revendication 1,
dans lequel chaque trou est dimensionné à l'extrémité arrière du corps de coupleur pour recevoir étroitement une longueur respective de la fibre à un seul noyau, et
dans lequel le procédé comprend par ailleurs, à l'étape (b), le fait de
insérer une extrémité antérieure d'une ou plusieurs longueurs de fibre à un seul noyau dans un trou respectif à l'extrémité arrière du corps de coupleur; et
resserrer le corps de coupleur autour des longueurs de fibre à un seul noyau insérées pour former un ensemble.

3. Procédé selon la revendication 1,
dans lequel l'étape (a) comporte le fait de pré-effiler l'extrémité avant du corps de coupleur, de sorte que chacun de la pluralité de trous soit effilé à un diamètre qui est inférieur à celui d'une longueur respective de la fibre monomode, de sorte que, lorsque chacune des longueurs de la fibre monomode est insérée dans un trou respectif à l'extrémité arrière du corps de coupleur, sa progression à travers le trou respectif soit arrêtée à mi-chemin.

4. Procédé selon la revendication 1,
dans lequel le noyau de la fibre à un seul noyau supporte la transmission d'un signal optique comprenant de multiples modes optiques transversaux.

5. Ensemble de couplage pour connecter chacune d'une pluralité de bornes à des noyaux individuels respectifs (22A à 22F) d'une fibre à noyaux multiples (20), comprenant:
une pluralité de fibres à un seul noyau présentant, chacune, une extrémité postérieure et une extrémité antérieure, où l'extrémité postérieure de chaque fibre à un seul noyau correspond à une borne respective,
dans lequel au moins certaines des fibres à un seul noyau présentent un diamètre extérieur sensiblement égal à celui de la fibre à noyaux multiples (20),
et dans lequel chacune des fibres à un seul noyau est configurée pour maintenir un diamètre de champ de mode sensiblement constant sur un taux d'effilement sélectionné,
dans lequel chacune des fibres à un seul noyau comprend une pluralité de régions concentriques comportant un noyau, un support entourant le noyau et une gaine entourant le support, où le noyau, le support et la gaine présentent des indices de réfraction respectifs qui sont configurés pour créer un guide d'onde intérieur entre le noyau et le support et un guide d'onde extérieur entre le support et la gaine, et où le noyau, le support et la gaine sont configurés de sorte que, du fait que la fibre est effilée, les variations respectives des diamètres des guides d'onde intérieur et extérieur résultent en un diamètre de champ de mode sensiblement constant qui correspond à celui d'un noyau individuel respectif de la fibre à noyaux multiples (20); et
un coupleur présentant un corps avec une extrémité arrière et une extrémité avant,
dans lequel le coupleur est un coupleur de fibres à trous multiples présentant des trous respectifs, s'étendant entre l'extrémité arrière et l'extrémité avant du coupleur, dans lesquels chaque extrémité antérieure de fibre à un seul noyau est insérée et fusionnée pour former un ensemble qui est effilé pour créer une face d'extrémité avant présentant un diamètre extérieur correspondant à celui de la fibre à noyaux multiples (20) dans laquelle les noyaux de fibres à un seul noyau sont disposés selon une configuration correspondant à celle des noyaux (22A à 22F) de la fibre à noyaux multiples (20),
de sorte que la fibre à noyaux multiples (20) puisse être connectée à la face d'extrémité avant de l'ensemble, les noyaux respectifs des fibres à un seul noyau étant alignés sur les noyaux individuels (22A à 22F) de la fibre à noyaux multiples (20) et le diamètre de champ de mode étant maintenu pour la propagation de la lumière entre les noyaux individuels (22A à 22F) de la fibre à noyaux multiples (20) et les noyaux respectifs des fibres à un seul noyau.

6. Ensemble de couplage selon la revendication 5,
dans lequel la gaine de fibre à un seul noyau comprend une région de gaine intérieure et une région de gaine extérieure, et dans lequel la région de gaine extérieure est configurée pour présenter un indice de réfraction inférieur à celui de la région de gaine, de manière à éviter une diaphonie entre les noyaux des fibres à un seul noyau.
